# EUROPEAN PATENT APPLICATION

(11) **EP 4 095 431 A1**
(43) Date of publication of application: **30.11.2022**
(21) Application number: 21744241.7
(22) Date of filing: 19.01.2021
(51) Int. Cl.: F21S 2/00, F21V 9/08, G09F 13/04, G09F 13/12

(54) **DISPLAY EQUIPMENT, VEHICLE INTERIOR AND EXTERIOR MEMBER, ILLUMINATING LAMP, DISPLAY SIGN, AND VEHICLE**

(30) Priority: 21.01.2020 JP 2020007507; 14.12.2020 JP 2020206392
(71) Applicant: Mitsubishi Chemical Corporation, Chiyoda-ku Tokyo 100-8251 (JP)
(72) Inventor: IMAOKA Shoutaro, Tokyo 100-8251 (JP); MARUTANI Takao, Tokyo 100-8251 (JP)
(74) Representative: Hoffmann Eitle
(86) International application number: PCT/JP2021/001661
(87) International publication number: WO 2021/149678

(57) **Abstract**

According to the present invention, there is provided a display apparatus (D) having a colored light-transmitting base material (10), a black light-transmitting member (56) containing a black colorant, and a light source unit (40), in which the light source unit (40) is disposed such that emission light of a light source is transmitted through the colored light-transmitting base material (10) and the black light-transmitting member (56) in this order, a total light transmittance (T) of a layer obtained by combining a layer of the colored light-transmitting base material (10) and a layer of the black light-transmitting member (56) is 13% or less, and the black light-transmitting member (56) has an L^{∗} value of 45 or less. The display apparatus (D) has excellent designability and high luminance.

## Description

### [Technical Field]

The present invention relates to a display apparatus, a vehicle interior and exterior member, an illumination light lamp, a display signboard, and a vehicle.

Priority is claimed on Japanese Patent Application No. 2020-07507 filed in Japan on January 21, 2020 and Japanese Patent Application No. 2020-206392 filed in Japan on December 14, 2020, the content of which is incorporated herein by reference.

### [Background Art]

In the use of a vehicle interior and exterior member, an illumination light lamp, and a display signboard (hereinafter, simply referred to as "the vehicle interior and exterior member or the like"), there is a demand for a display apparatus that displays a required color tone and predetermined information.

In recent years, in the use of the vehicle interior and exterior member, a presence is shown by exhibiting a chromatic or an achromatic color tone when a light source is turned on, in contrast, the presence is removed by exhibiting an achromatic black color tone (jet black) when the light source is turned off, or steps and joints can be inconspicuous, that is, the display apparatus having excellent designability is required. Further, recently, the size of the vehicle interior and exterior member has been enlarged, and excellent visibility from a distance is required. Therefore, a display device with excellent designability and high luminance is required.

As the display apparatus that exhibits designability by turning on and off the light source, for example, Patent Document 1 discloses a display device in which, when the light source is turned on, green light emitted from the light source is converted into white light on a white adjustment layer and then characters and the like are displayed on a black smoke transparent layer, and, when the light source is turned off, the characters and the like are concealed on a light-diffusing layer.

Patent Document 2 discloses a display plate used for an internal illumination system, which includes a base sheet that contains a light-diffusing agent and is colored in a dark color, and a mask unit for displaying a specific symbol or a color.

Patent Document 3 discloses a display device that has a smoke layer and a filter layer, achieves blackout (jet blackness when the light source is turned off) by dimming on the smoke layer, and displays a design with high luminance by setting a high transmittance of a filter when the design is displayed by transmitting light of the light source on the filter layer.

### [Citation List]

### [Patent Documents]

[Patent Document 1]
   Japanese Utility Model Registration Publication No. 2540890
[Patent Document 2]
   Japanese Patent Application Publication No. H2-034891
[Patent Document 3]
   Japanese Patent Application Publication No. 2013-003489

### [Summary of Invention]

### [Technical Problem]

However, the display device described in Patent Document 1 may display or conceal characters and the like on a black smoke transparent layer by switching on and off the light source, and has a form of exhibiting a specific color tone in high in luminance when the light source is turned on and exhibiting a black color tone (jet black) when the light source is turned off, thereby being not suitable for exhibiting designability.

In the display plate disclosed in Patent Document 2, due to external illumination light or ambient light entering inside the color display plate, a display part of the display plate which should be visually recognized as black originally when the light source is turned off is visually recognized as whitish. In addition, when the light source is turned on, the display part of the display plate is visually recognized as whitish compared with a predetermined color tone.

In the display device described in Patent Document 3, the light of the light source may be reflected at an interface between the smoke layer and the filter layer, such that the luminance of the emission light of the display device may be reduced, the designability may be impaired because the inside of the display device is seen through, or the designability may be indistinctly displayed due to the returning light that is repeatedly emitted inside the filter layer.

Under the circumstances, there has been a demand for a display apparatus having excellent designability and high luminance.

An object of the present invention is to provide a display apparatus having excellent designability and high luminance, a vehicle interior and exterior member including the display apparatus, an illumination light lamp including the display apparatus, a display signboard including the display apparatus, and a vehicle including vehicle interior and exterior member or the illumination light lamp.

### [Solution to Problem]

The above problems can be solved by the following inventions.

A first gist of the present invention is to provide a display apparatus including a colored light-transmitting base material, a black light-transmitting member containing a black colorant, and a light source unit, in which the light source unit is disposed such that emission light of a light source is transmitted through the colored light-transmitting base material and the black light-transmitting member in this order, a total light transmittance (T) of a layer obtained by combining a layer of the colored light-transmitting base material and a layer of the black light-transmitting member is 13% or less, and the black light-transmitting member has an L^{∗} value of 45 or less.

A second gist of the present invention is to provide a display apparatus including a colored light-transmitting base material, a light-blocking base material, a black light-transmitting member containing a black colorant, and a light source unit, at least a part of which is located between the colored light-transmitting base material and the light-blocking base material, in which the light source unit is disposed to be located at a position facing the black light-transmitting member while interposing the colored light-transmitting base material therebetween such that emission light of a light source is transmitted through the colored light-transmitting base material and the black light-transmitting member, the colored light-transmitting base material has a transmission band for transmitting light in a predetermined wavelength range, a total light transmittance is 5.0% or more, and the black light-transmitting member has an L^{∗} value of 45 or less.

A third gist of the present invention is to provide a vehicle interior and exterior members including the display apparatus.

A fourth gist of the present invention is to provide an illumination light lamp including the display apparatus.

A fifth gist of the present invention is to provide a display signboard including the display apparatus.

A sixth gist of the present invention is to provide a vehicle including the vehicle interior and exterior member.

### [Advantageous Effects of Invention]

According to the present invention, it is possible to provide a display apparatus, a vehicle interior and exterior member, an illumination light lamp, a display signboard, and a vehicle which have excellent designability and high luminance.

The display apparatus of the present invention has excellent designability and high luminance, thereby being suitable for use in the vehicle interior and exterior member, such as a vehicle light cover, a scuff plate, a door trim, a meter panel, a display panel of an audio car navigation system, or a pillar, which has increased in size in recent years and in which visibility from a distance is required, the illumination light lamp, and the display signboard.

### [Brief Description of Drawings]

Fig. 1 is a schematic side view of a display apparatus which has a light emitting element having a colored light-transmitting base material, a light-blocking base material, a black light-transmitting member containing a black colorant, an LED light source, and a black circuit board as a light source unit.
Fig. 2 is a schematic side view of a display apparatus which has the colored light-transmitting base material, the light-blocking base material, the black light-transmitting member containing the black colorant, and a planar light source as the light source unit.
Fig. 3 is a schematic side view of a display apparatus which further has, as a display unit, a black cutting sheet as a light-blocking member on an outer surface of the black light-transmitting member of the display apparatus of Fig. 1.
Fig. 4 is a schematic perspective view of the black light-transmitting member that displays predetermined information on a display unit by the light-blocking member.
Fig. 5 is a schematic perspective view of the black light-transmitting member that has a surface on which a light-emitting mechanism is formed.
Fig. 6 is a schematic front view of the black cutting sheet used as the light-blocking member.
Fig. 7 shows a light transmittance curve of a colored light-transmitting base material (1) of a first example and first and third comparative examples.
Fig. 8 shows a light transmittance curve of a colored light-transmitting base material (2) of a second example and a second comparative example.
Fig. 9 shows a light transmittance curve of a colored light-transmitting base material (3) of a third example.
Fig. 10 shows a light transmittance curve of a colored light-transmitting base material (4) of a fourth example.
Fig. 11 shows a light transmittance curve of a colored light-transmitting base material (5) of a fourth comparative example.
Fig. 12 shows a light transmittance curve of a black light-transmitting member (6) of the first and third examples and the first comparative example.
Fig. 13 shows a light transmittance curve of a black light-transmitting member (7) of the second example.
Fig. 14 shows a light transmittance curve of a black light-transmitting member (8) of the fourth example.
Fig. 15 shows a light transmittance curve of a black light-transmitting member (9) of the second comparative example.
Fig. 16 shows a light transmittance curve of a black light-transmitting member (10) of the third comparative example.
Fig. 17 shows a light transmittance curve of a black light-transmitting member (11) of the fourth comparative example.
Fig. 18 is a schematic side view of a measurement device for measuring a color of transmitted light of the display apparatus.

### [Description of Embodiments]

A numerical range represented using "∼" means a range including numerical values written before and after "∼" as a lower limit value and an upper limit value, and "A∼B" means "A or more and B or less".

"LED" is an abbreviation for a light emitting diode.

Hereinafter, embodiments of a display apparatus, a vehicle interior and exterior member, an illumination light lamp, a display signboard, and a vehicle of the present invention will be described. The present invention is not limited to the embodiments below, and various modifications are possible without changing the gist of the present invention.

### [Display Apparatus]

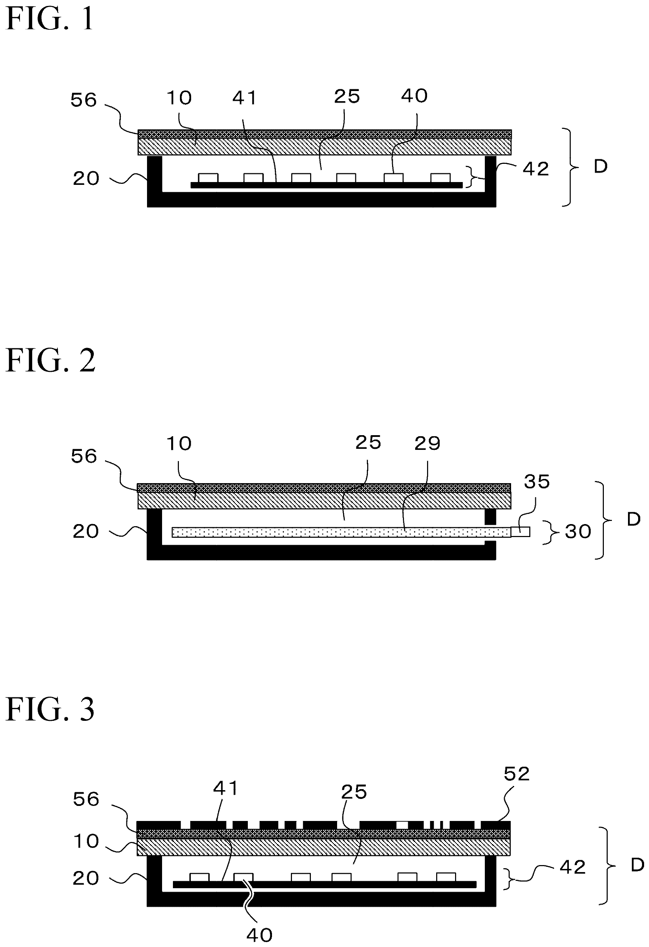

As shown in Figs. 1 and 2, the display apparatus according to a first aspect of the present invention has a colored light-transmitting base material, a black light-transmitting member containing a black colorant, and a light source unit.

In the display apparatus according to the first aspect, the light source unit is disposed such that emission light of the light source is transmitted through the colored light-transmitting base material and the black light-transmitting member in this order.

In the display apparatus according to the first aspect, the total light transmittance (T) of a layer obtained by combining a layer of the colored light-transmitting base material and a layer of the black light-transmitting member is 13% or less.

In the display apparatus according to the first aspect, the black light-transmitting member has an L^{∗} value of 45 or less.

Further, in the display apparatus according to the first aspect, the total light transmittance (T_{α}) of the colored light-transmitting base material can be 5.0% or more.

As shown in Figs. 1 and 2, a display apparatus according to a second aspect of the present invention includes a colored light-transmitting base material 10, a black light-transmitting member 56 containing a black colorant, a light-blocking base material 20, a light source unit (LED light source) 40 or a light source unit (planar light source) 30 located between the colored light-transmitting base material 10 and the light-blocking base material 20.

In the display apparatus according to the second aspect, at least a part of the light source unit 30 (40) may be located between the colored light-transmitting base material 10 and the light-blocking base material 20, or the whole light source unit 30 (40) may be located.

In the display apparatus according to the second aspect, the colored light-transmitting base material 10 has a transmission band for transmitting light in a predetermined wavelength range.

In the display apparatus according to the second aspect, the light source unit 30 (40) is disposed such that emission light emitted from an emission surface of the light source unit 30 (40) is transmitted through the colored light-transmitting base material 10 and the black light-transmitting member 56 in this order, at a position facing the black light-transmitting member 56 while interposing the colored light-transmitting base material 10 therebetween.

In the display apparatus according to the second aspect, the colored light-transmitting base material 10 has a total light transmittance of 5.0% or more. A method for measuring the total light transmittance will be described later.

In the display apparatus according to the second aspect, the black light-transmitting member has an L^{∗} value of 45 or less.

Further, in the display apparatus according to the second aspect, for example, the total light transmittance (T) of a layer obtained by combining a layer of the colored light-transmitting base material 10 and a layer of the black light-transmitting member 56 is preferably 13% or less.

As an embodiment of the display apparatus according to the first aspect and the second aspect of the present invention (hereinafter, simply referred to as a "display apparatus of the present invention"), as shown in Figs. 1 to 3, a form in which the light source unit 30 (40) is disposed in a space 25 formed by the colored light-transmitting base material 10 and the light-blocking base material 20 may be mentioned.

By providing the space 25 between the colored light-transmitting base material 10 and the light-blocking base material 20, the emission light from the light source unit 30 (40) can be introduced to the colored light-transmitting base material 10 without impairing an intensity and can be extracted to the outside of the display apparatus. As a result, the display apparatus of the present invention can obtain high luminance.

When the light source unit 30 (40) is turned on (when a light source is turned on), by using the emission light of the light source unit installed on a back surface side (a side opposite to a viewer side) of the colored light-transmitting base material 10, the display apparatus of the present invention can perform luminescent display on the colored light-transmitting base material 10 with a desired chromatic or achromatic color tone, or can display predetermined information on the colored light-transmitting base material 10. Therefore, the viewer of the display apparatus can favorably perceive the presence of the display apparatus.

In the display apparatus of the present invention, in order to uniformly irradiate the colored light-transmitting base material 10 with emission light from the light source unit, it is possible to dispose a light-diffusing member, such as a known light-diffusing sheet or a known light-diffusing film, between the colored light-transmitting base material 10 and the light source unit 40.

In the display apparatus of the present invention, when the light source unit is turned off (when the light source is turned off), the light-blocking base material 20 is visually recognized (seen through) over the colored light-transmitting base material 10 when viewed by the viewer of the display apparatus. Therefore, a black color tone is emphasized, and thus, in combination with a black color sense of the colored light-transmitting base material 10 itself, steps and joints of a surface of the colored light-transmitting base material 10 can be inconspicuous or the display apparatus itself can be inconspicuous.

That is, when the light source unit is turned on or turned off, the appearance (look) of the display apparatus becomes peculiarly unique (interesting) when the display apparatus is viewed straight from the viewer side. As a result, the present invention can provide a display apparatus that can realize a new look.

### <Colored Light-Transmitting Base Material>

The colored light-transmitting base material is one component of the display apparatus of the present invention.

The colored light-transmitting base material 10 is colored with a chromatic color or an achromatic color.

Since the colored light-transmitting base material 10 has a transmission band for transmitting light in a predetermined wavelength range, the colored light-transmitting base material 10 having an appropriate light transmittance can be appropriately selected and used according to a wavelength characteristic of the light source unit 30 (40) used in combination with the colored light-transmitting base material 10. As an effect, when the light source unit is turned on (when the light source is turned on), the luminescent display can be performed on the colored light-transmitting base material 10 with the desired chromatic or achromatic color tone using the emission light of the light source unit 30 (40) installed on the back surface side (the side opposite to the viewer side) of the colored light-transmitting base material 10, and thus the viewer of the display apparatus can favorably perceive the presence of the display apparatus.

In the present specification, "transmitting light in a predetermined wavelength range" means transmitting light including light emitted from the light source unit 30 (40) in a predetermined wavelength range and cutting light in the other wavelength ranges.

The lower limit of the total light transmittance (T_{α}) of the colored light-transmitting base material 10 is not particularly limited, but is preferably 5.0% or more, more preferably 8.0% or more, and still more preferably 12% or more. When the total light transmittance (T_{α}) is 5.0% or more and when the light source unit 30 (40) is turned on (when the light source is turned on), the luminescent display can be performed with the chromatic color tone or the achromatic color tone of the colored light-transmitting base material 10. As a result, when the light source is turned on, it is possible to cause the viewer of the display apparatus to favorably perceive the existence of the display apparatus. On the other hand, the upper limit of the total light transmittance (T_{α}) is not particularly limited, but is preferably 80% or less, more preferably 60% or less, and still more preferably 30% or less. When the total light transmittance (T_{α}) of the colored light-transmitting base material 10 is 80% or less and when the light source unit 30 (40) is turned off (when the light source is turned off), the chromatic color tone or the achromatic color tone of the colored light-transmitting base material 10 is suppressed from being conspicuous, and the black color tone of the light-blocking base material 20 is combined with the black color sense of the colored light-transmitting base material 10 itself, such that the display apparatus exhibits the black color tone (jet black). As a result, when the light source is turned off, it is possible to cause the display apparatus to be inconspicuous with respect to the viewer of the display apparatus. The above preferable upper limit and preferable lower limit can be arbitrarily combined.

The L^{∗} value of the colored light-transmitting base material 10 is not particularly limited, but is preferably 45 or less. When the L^{∗} value of the colored light-transmitting base material is 45 or less, a black color is shown when the light source is turned off. The L^{∗} value of the colored light-transmitting base material is more preferably 40 or less, further preferably 35 or less, and still more preferably 30 or less. When the L^{∗} value is small, the jet blackness is increased, the presence is reduced, and the designability becomes favorable.

The L^{∗} value of the colored light-transmitting base material can be measured by the same method as a method for measuring the L^{∗} value of the black light-transmitting member.

A shape of the colored light-transmitting base material 10 is not particularly limited, and can be a flat plate shape or a plate shape having a concave curved surface or a convex curved surface in at least a partial area.

### (Material Configuring Colored Light-Transmitting Base Material)

A type of a material constituting the colored light-transmitting base material is not particularly limited, and a transparent resin containing a dye or a pigment (hereinafter, the dye and the pigment are collectively the referred to as "colorant" appropriately), or glass containing a dye or a pigment can be used.

The dye will be described later.

A known inorganic pigment can be used as the pigment. For example, red iron oxide (diiron trioxide) and cadmium red may be mentioned when red is required, silicate-based pigments of ferrocyan-based pigments, such as ultramarine blue and dark blue, and cobalt blue may be mentioned when blue is required, titanium-cobalt-based green, cobalt-green, rare metal-based compounds, and the like may be mentioned when green is required.

In the present invention, the color tone or jet blackness of transmitted light of the colored light-transmitting base material, or the luminance of the display apparatus can be easily controlled to a desired value by adjusting the type and content of the colorant. Therefore, it is preferable that the colored light-transmitting base material contain at least the dye as the colorant.

Since glass is has excellent transparency and weather resistance, the luminance of the display apparatus becomes favorable and is suitable for outdoor use.

Since the transparent resin has excellent processing property, the colored light-transmitting base material can be processed into a complicated shape, and thus the designability of the display apparatus can be favorable. In addition, the transparent resin has excellent lightness, thereby being suitable for workability when arranging the display apparatus and weight reduction of the vehicle.

The transparent resin is not particularly limited as long as at least a transparent thermoplastic resin having a high light transmittance in a visible light area, and a known transparent thermoplastic resin can be used. From the viewpoint of excellent transparency and favorable luminance of the display apparatus, at least one selected from methacrylic resin, polycarbonate resin and polystyrene resin is preferable. In particular, the methacrylic resin has excellent transparency, weather resistance, and impact resistance, thereby being suitable for the vehicle interior and exterior member, the illumination light lamp, and the display signboard.

The weight-average molecular weight and the number-average molecular weight of the above-described transparent resin can be appropriately set by those skilled in the art according to well-known techniques according to a molding method and a processing condition of the colored light-transmitting base material, the intended use of the display apparatus, and the like.

The above-described transparent resin may contain an additive such as an impact strength modifier, a release agent, an ultraviolet absorber, a polymerization inhibitor, an antioxidant, or a flame retardant, within a range that does not impair the effects of the present invention.

### (Methacrylic Resin)

Although the methacrylic resin that can be used as the transparent resin in the present invention is not particularly limited, MMA copolymer is preferable, which is a homopolymer of methyl methacrylate (hereinafter, abbreviated as "MMA"), or a copolymer (hereinafter, abbreviated as an "MMA copolymer") of MMA and a monomer other than MMA (hereinafter, abbreviated as "another monomer") and in which a content rate of a repeating unit (hereinafter, abbreviated as "MMA unit") derived from the MMA is 70% by mass or more and less than 100% by mass of the total mass of the MMA copolymer.

The other monomer is not particularly limited as long as it is copolymerizable with MMA.

Examples of the above-described other monomer include (meth)acrylate compounds, such as methyl acrylate, ethyl (meth)acrylate, and n-butyl (meth)acrylate; and aromatic vinyl compounds such as styrene and α-methylstyrene.

As a commercial product of the methacrylic resin, Acrypet (registered trademark) VH, MD, MF, IRK304, VRL40 (all are trade names, manufactured by Mitsubishi Chemical Corporation), and the like may be mentioned.

### (Polycarbonate Resin)

As the polycarbonate resin that can be used as the transparent resin of the present invention, for example, a resin obtained by reacting a known dihydric phenol with a known carbonylating agent using an interfacial polycondensation method or a melt transesterification method; a resin obtained by polymerizing the known carbonate prepolymer using a solid phase transesterification method or the like; a resin obtained by polymerizing a known cyclic carbonate compound using a ring opening polymerization method, or the like may be mentioned.

As a commercial product of the polycarbonate resin, Panlite series (trade name, manufactured by Teijin Kasei), Iupilon series (trade name, manufactured by Mitsubishi Engineering Plastics), SD polyca series (trade name, manufactured by Sumitomo Dow), Caliber (trade name, manufactured by Dow Chemical Co., Ltd.), CZ series and PCZ series (trade names, manufactured by Mitsubishi Gas Chemical Co., Inc.), APEC series (trade name, manufactured by Bayer Co., Ltd.) and the like may be mentioned.

### (Polystyrene Resin)

As the polystyrene resin that can be used as the transparent resin of the present invention, a styrene copolymer can be mentioned in which a content rate of a homopolymer of styrene (hereinafter, abbreviated as "St") or a repeating unit derived from St (hereinafter, abbreviated as "St unit") is 50% by mass or more and less than 100% by mass with respect to the total mass of the polystyrene resin.

Specifically, as the polystyrene resin, the polystyrene, a styrene-acrylonitrile resin, an acrylonitrile-butadiene-styrene resin, and a methyl methacrylate-styrene resin (MS resin) may be mentioned. As the polystyrene resin, methyl methacrylate-styrene resin is preferable.

As a commercial product of the polystyrene, PSJ polystyrene and ET series (trade name, manufactured by PS Japan) may be mentioned.

As a commercial product of the MS resin, Estyrene MS series (trade name, manufactured by Nippon Steel & Sumikin Chemical Co., Ltd.), Sebian MAS series, and MAS series (trade names, manufactured by Daicel Polymer Ltd.) may be mentioned.

### <Black Light-Transmitting Member Containing Black Colorant>

The display apparatus of the present invention has a black light-transmitting member containing a black colorant on a position facing the light source unit, that is, on a main surface on a front side (viewer side) of the colored light-transmitting base material while interposing the colored light-transmitting base material therebetween.

The black light-transmitting member of the present invention refers to the light-transmitting member colored in black, which causes the emission light of the LED light source to transmit therethrough to the extent that the colored light-transmitting base material is visually recognized with a predetermined color tone.

By disposing the black light-transmitting member on the front side (viewer side) of the colored light-transmitting base material, when the light source is turned off, the external illumination light or ambient light (hereinafter, simply referred to as "ambient light") that enters from the outside to the inside of the display apparatus is reflected by the colored light-transmitting base material and attenuated by the black light-transmitting member, such that the jet blackness of the display apparatus is enhanced when viewed from the viewer. Further, when the light source is turned on, the emission light of the light source unit is transmitted through the black light-transmitting member, such that the colored light-transmitting base material is visually recognized more clearly with a predetermined color tone, and a contrast difference of the color tone obtained when the light source is turned off is more prominently recognized.

The upper limit of the total light transmittance (T_{β}) of the black light-transmitting member is not particularly limited, but is preferably 15% or less, more preferably 12% or less, and still more preferably 10% or less. When the total light transmittance (T_{β}) of the colored light-transmitting base material 10 is 15% or less and when the light source unit 30 (40) is turned off (when the light source is turned off), the chromatic color tone or the achromatic color tone of the colored light-transmitting base material 10 is suppressed from being conspicuous, and the black color tone of the light-blocking base material 20 is combined with the black color sense of the colored light-transmitting base material 10 itself, and thus the display apparatus exhibits the black color tone (jet black). As a result, when the light source is turned off, it is possible to cause the display apparatus to be inconspicuous with respect to the viewer of the display apparatus. On the other hand, the lower limit of the total light transmittance (T_{β}) is not particularly limited, but is preferably 3.0% or more, more preferably 5.0% or more, and still more preferably 7.0% or more. When the total light transmittance (T_{β}) is 3.0% or more and when the light source unit 30 (40) is turned on (when the light source is turned on), the luminescent display can be performed with the chromatic color tone or the achromatic color tone of the colored light-transmitting base material 10. As a result, when the light source is turned on, it is possible to cause the viewer of the display apparatus to favorably perceive the existence of the display apparatus. The above preferable upper limit and preferable lower limit can be arbitrarily combined.

The total light transmittance (T_{β}) of the black light-transmitting member is preferably 3.0% or more and 15% or less, more preferably 5.0% or more and 12% or less, and still more preferably 7.0% or more and 10% or less.

The upper limit of the L^{∗} value (L^{∗}₁) of the black light-transmitting member is not particularly limited, but is preferably 45 or less, more preferably 40 or less, and still more preferably 35 or less. When the L^{∗} value (L^{∗}₁) is 45 or less and when the light source unit 30 (40) is turned off (when the light source is turned off), the chromatic color tone or the achromatic color tone of the colored light-transmitting base material 10 is suppressed from being conspicuous, and the black color tone of the light-blocking base material 20 is combined with the black color sense of the colored light-transmitting base material 10 itself, and thus the display apparatus exhibits the black color tone (jet black). As a result, when the light source is turned off, it is possible to cause the display apparatus to be inconspicuous with respect to the viewer of the display apparatus. On the other hand, the lower limit of the L^{∗} value (L^{∗}₁) is not particularly limited, but is usually preferably 10 or more.

In the present invention, the L^{∗} value (L^{∗}₁) is calculated from tristimulation values X, Y, and Z measured by spectrophotometry (integrating sphere type or reflection measurement) in accordance with ISO 11664-4.

The L^{∗} value (L^{∗}₂) of the layer including the layer of the colored light-transmitting base material and the layer of the black light-transmitting member is not particularly limited, but is preferably 34 or less, more preferably 30 or less, and further more preferably 25 or less. When the L^{∗} value (L^{∗}₂) is 34 or less and when the light source unit 30 (40) is turned off (when the light source is turned off), the chromatic color tone or the achromatic color tone of the colored light-transmitting base material 10 is suppressed from being conspicuous, and the black color tone of the light-blocking base material 20 is combined with the black color sense of the colored light-transmitting base material 10 itself, and thus the display apparatus exhibits the black color tone (jet black). As a result, when the light source is turned off, it is possible to cause the display apparatus to be inconspicuous with respect to the viewer of the display apparatus. On the other hand, the lower limit of the L^{∗} value (L^{∗}₂) is not particularly limited, but is usually preferably 10 or more.

In the present invention, the L^{∗} value (L^{∗}₂) is calculated from tristimulation values X, Y, and Z measured by spectrophotometry (integrating sphere type or reflection measurement) in accordance with ISO 11664-4.

As the black light-transmitting member, it is possible to use, for example, a sheet type or a film type light-transmitting member, which is obtained by mixing a known transparent resin, such as an acrylic resin, a polycarbonate resin, or a polystyrene resin, with the carbon black or the known dye or pigment to be toned in black. Specifically, a sheet type molded product or a film type molded product, such as Acrypet (registered trademark) VH PTS0042 or VH PTS0043 manufactured by Mitsubishi Chemical Corporation, can be used.

The upper limit of the total light transmittance (T) of the layer obtained by combining the layer of the colored light-transmitting base material and the layer of the black light-transmitting member is not particularly limited, but is preferably 13.0% or less, more preferably 11.5% or less, and still more preferably 9.0% or less. When the total light transmittance (T) is 13.0% or less and when the light source unit 30 (40) is turned off (when the light source is turned off), the chromatic color tone or the achromatic color tone of the colored light-transmitting base material 10 is suppressed from being conspicuous, and the black color tone of the light-blocking base material 20 is combined with the black color sense of the colored light-transmitting base material 10 itself, and thus the display apparatus exhibits the black color tone (jet black). As a result, when the light source is turned off, it is possible to cause the display apparatus to be inconspicuous with respect to the viewer of the display apparatus.

On the other hand, the lower limit of the total light transmittance (T) is not particularly limited, but is preferably 0.4% or more, more preferably 2.5% or more, and still more preferably 4.0% or more. When the total light transmittance (T) is 0.4% or more and when the light source unit 30 (40) is turned on (when the light source is turned on), the luminescent display can be performed with the chromatic color tone or the achromatic color tone of the colored light-transmitting base material 10. As a result, when the light source is turned on, it is possible to cause the viewer of the display apparatus to favorably perceive the existence of the display apparatus. The above preferable upper limit and preferable lower limit can be arbitrarily combined. Further, the total light transmittance (T) of the layer obtained by combining the layer of the colored light-transmitting base material and the layer of the black light-transmitting member is preferably 0.4% or more and 13.0% or less, more preferably 2.5.% or more and 11.5% or less, and still more preferably 4.0% or more and 9.0% or less.

In the display apparatus of the present invention, the layer of the colored light-transmitting base material and the layer of the black light-transmitting member are configured to be laminated such that the black light-transmitting member is in contact with all or a part of the surface of the colored light-transmitting base material. Therefore, it is possible to suppress the emission light of the light source unit from being reflected or scattered at the interface between the two layers, such that it is possible to suppress a decrease in emission luminance, spots, and glare when the light source is turned on and when viewed from the viewer of the display apparatus. Further, when the layer of the colored light-transmitting base material and the layer of the black light-transmitting member are laminated such that a bonding interface thereof is substantially flat, it is possible to suppress the above-described decrease in emission luminance, spots, and glare.

As a method for forming the layer of the black light-transmitting member on all or a part of the surface of the colored light-transmitting base material, a method for bonding the colored light-transmitting base material and the black light-transmitting member using a solvent bonding method or a hot pressing method or a method for molding the layer of the black light-transmitting member using a two-color molding method may be mentioned.

A difference in the refractive index between the colored light-transmitting base material and the black light-transmitting member is preferably 0.03 or less.

When the difference in the refractive index is 0.03 or less, it is possible to suppress the emission light of the light source unit from being reflected or scattered at the interface between the two layers, such that it is possible to suppress the decrease in emission luminance, spots, and glare when the light source is turned on and when viewed from the viewer of the display apparatus.

Further, when the light-transmitting member, which is obtained by mixing a known light-diffusing agent with the black light-transmitting member and which has the light diffusivity, is used, it is possible to prevent the LED light source from becoming transparent to be visually recognized (seen through) in the dot shape, as described above. As the light-diffusing agent, known fine particles, such as the titanium dioxide, the aluminum oxide, the zinc oxide, the zinc sulfide, and the barium sulfate, can be used. When the transparent resin is a methacrylic resin, the titanium dioxide, the aluminum oxide, the zinc oxide and the zinc sulfide are preferable, and the titanium dioxide is further preferable.

### (Display Unit)

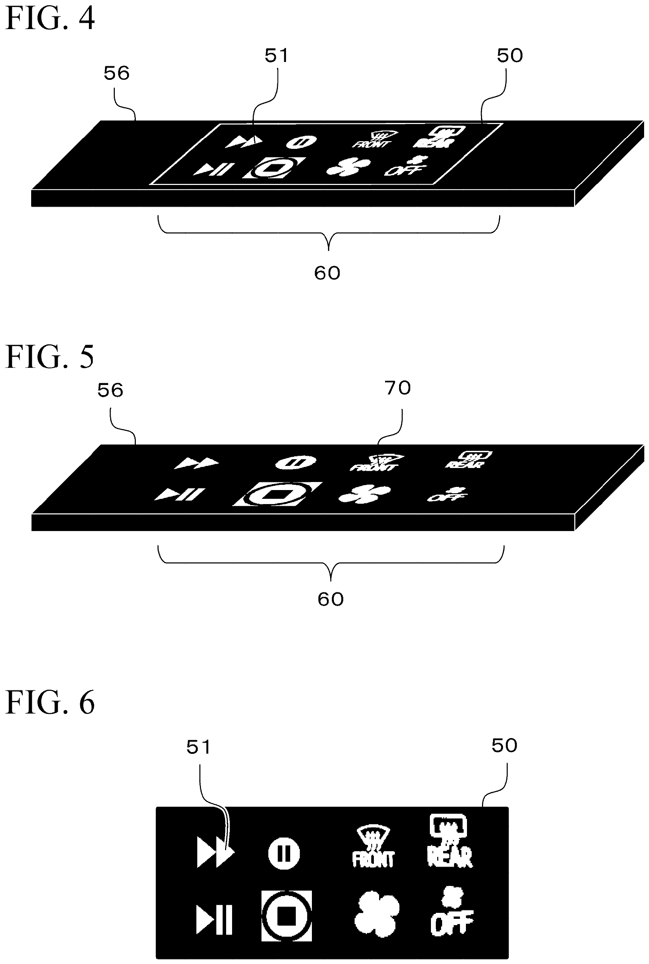

As shown in Figs. 4 and 5, the black light-transmitting member 56 can include a display unit 60 that displays predetermined information, such as letters, numbers, marks or symbols, and signs, as well as exhibits the chromatic color tone or the achromatic color tone when the light source is turned on.

In one embodiment of the display unit 60, as shown in Fig. 3, a light blocking (for example, black) light-blocking member 50 is provided on a main surface on a front side (viewer side) of the black light-transmitting member 56.

The light-blocking member 50 is formed with a negative light-transmitting unit 51 for displaying the predetermined information. When the light source is turned on, a part of the emission light from the light source unit 30 (40) is blocked by the light-blocking member 50. As a result, the predetermined information is displayed on the display unit 60, and the viewer of the display apparatus can see through (visually recognize) the predetermined information displayed on the black light-transmitting member 56.

In the present specification, the "main surface of the colored light-transmitting base material" means a surface substantially perpendicular with respect to a thickness direction among surfaces configuring the colored light-transmitting base material 10.

The light-blocking member 50 is, for example, an opaque printed layer printed and formed using a black opaque ink on at least one main surface of the black light-transmitting member 56, or a black cutting sheet attached to at least one main surface of the colored light-transmitting base material as shown in Fig 6.

In another embodiment of the display unit 60, a light-emitting mechanism 70 is formed in at least a partial area of the main surface on the front side (viewer side) of the black light-transmitting member 56 which faces the viewer side, as shown in Fig. 5. The light-emitting mechanism 70 is a mechanism for discharging the emission light from the light source unit 30 (40) introduced into the black light-transmitting member 56 to the outside (viewer side) of the display apparatus of the present invention. When the light source is turned on, the emission light from the light source unit 30 (40) is discharged from the light-emitting mechanism 70, and thus the viewer of the display apparatus can see through (visually recognize) the predetermined information.

Specifically, as a method for forming the light-emitting mechanism 70, for example, a method for forming the minute recesses or the protrusions by irradiating a surface of the main surface of the black light-transmitting member 56 with a laser, a method for forming the minute recesses or the protrusions on the surface of the main surface of the black light-transmitting member 56 using a known embossing method, a known mechanical cutting method, or the like, and a method for forming a resin layer in which scatterers, such as titanium oxide particles, are dispersed in a transparent binder resin, such as an acrylic resin, on the surface of the main surface of the black light-transmitting member 56 may be mentioned.

### <Light-Blocking Base Material>

The light-blocking base material is one of the components of the display apparatus of the present invention.

The light-blocking base material 20 has a light-blocking property as a whole, and the wall surface on the side where the light source unit 30 (40) is disposed (inner wall surface) has a black achromatic color (jet black). The outer wall surface of the light-blocking base material can have any color tone as long as the light-blocking base material does not impair the light-blocking property.

The display apparatus of the present invention includes the light-blocking base material 20, and thus, when the light source unit is turned off (when the light source is turned off), the inner wall surface of the light-blocking base material 20 is visually recognized (seen through) over the black light-transmitting member 56 and the colored light-transmitting base material 10 when viewed by the viewer of the display apparatus. Therefore, the black color tone is emphasized and, in combination with the black color sense of the black light-transmitting member 56, the steps and joints on the surfaces of the black light-transmitting member 56 and the colored light-transmitting base material 10 can be inconspicuous or the display apparatus itself can be inconspicuous.

The light-blocking base material 20 is not particularly limited, and it is possible to use, for example, a black synthetic resin which is obtained by mixing a known synthetic resin with carbon black or a known dye or pigment to be toned in black, or a material obtained by painting an inner wall surface of the known metal plate with black. In a case where the black synthetic resin is used, a manipulation of painting the inner wall surface with black becomes unnecessary.

### <Light Source Unit>

The light source unit is one component of the display apparatus of the present invention.

The light source unit 30 (40) is disposed between the colored light-transmitting base material 10 and the light-blocking base material 20 such that the emission light emitted from the emission surface of the light source unit 30 (40) transmits through the colored light-transmitting base material 10 and the black light-transmitting member 56. As described above, between the colored light-transmitting base material 10 and the light-blocking base material 20, at least a part of the light source unit 30 (40) may be located or the whole light source unit 30 (40) may be located.

Specifically, as shown in Figs. 1 to 3, the light source unit 30 (40) is disposed in the space 25 formed by the colored light-transmitting base material 10 and the light-blocking base material 20, and is disposed such that emission light from the light source unit 30 (40) transmits through the colored light-transmitting base material 10 and the black light-transmitting member 56.

An embodiment of the light source unit is not particularly limited, and includes, for example, the LED light source 40 shown in Fig. 1 and 3, or the planar light source 30 shown in Figs. 2.

### (Planar Light Source)

The light source unit can include a planar light source.

A form of the planar light source is not particularly limited. For example, as shown in Fig. 2, as the light source unit, an edge light-type planar light-emitting body, in which an LED light source 35 is disposed to be adjacent to a side end portion of a sheet type light-guiding body 29 made of a transparent resin, can be used as the light source unit (planar light source) 30 (hereinafter, referred to as a "planar light source 30"). In this case, a place where the LED light source 35 is disposed is not particularly limited, and may not be disposed or may be disposed between the colored light-transmitting base material 10 and the light-blocking base material 20.

The planar light source 30 can be disposed such that the main surface of the planar light source 30 follows the main surface of the colored light-transmitting base material 10 in the space 25 formed by the colored light-transmitting base material 10 and the light-blocking base material 20. At least a part of the emission surface of the planar light source 30 is between the colored light-transmitting base material 10 and the light-blocking base material 20, and the emission light from the emission surface reaches the colored light-transmitting base material 10, and, therefore, the colored light-transmitting base material 10 is backlight illuminated.

A form of the planar light source 30 is not particularly limited. In addition, for example, as the planar light source, a direct-type light-guiding body, which is disposed to be adjacent to the LED light source on the main surface of the sheet type light-guiding body made of the transparent resin on a back surface side (the side opposite to the viewer side), can be used. The LED light source which is the same as the LED light source that will be described later can be used.

When the planar light source 30 is used as the light source unit, the colored light-transmitting base material 10 can be illuminated with a single light source, and thus a dedicated light source is not required. Therefore, a new look can be realized while avoiding an increase in cost.

A type of a transparent resin material used for the light-guiding body is not particularly limited, and a light-transparent resin material, which has light diffusivity and is obtained by mixing a known light-diffusing agent with a known transparent resin can be used. As the transparent resin, for example, a methacrylic resin, a polycarbonate resin, and a polystyrene resin can be used. In particular, from the viewpoint of excellent transparency, luminance, and weather resistance of the planar light source, the methacrylic resin is preferable. As the light-diffusing agent, for example, known fine particles, such as titanium dioxide, aluminum oxide, zinc oxide, zinc sulfide, and barium sulfate, can be used.

When the transparent resin is a methacrylic resin, as the light-diffusing agent, the titanium dioxide, the aluminum oxide, the zinc oxide, or the zinc sulfide is preferable, and the titanium dioxide is further preferable.

### (LED Light Source)

The light source unit can include the LED light source.

As described above, the total light transmittance of the colored light-transmitting base material is 5% or more. Therefore, when the light source is turned on, it is possible to perform the luminescent display on the colored light-transmitting base material with the color tone of the desired chromatic color or achromatic color, and it is possible to cause the viewer of the display apparatus to favorably perceive the existence of the display apparatus. When the LED light source is used as the light source unit, the LED light source can emit monochromatic light with high light output. Therefore, the display apparatus of the present invention can exhibit a desired chromatic color tone with sufficient luminance with respect to the viewer when the light source is turned on.

Further, when the LED light source is used as the light source unit, a light transmittance pattern of the colored light-transmitting base material is appropriately selected, and the light transmittance pattern is appropriately combined with an emission light wavelength of the LED light source, and thus a desired chromatic color tone can be clearly exhibited when the light source is turned on.

In the present invention, it is possible to use, as the LED light source, one type selected from the group consisting of a chip type light emitting diode (white LED) that emits white light, a chip type light emitting diode (blue LED) that emits blue light, a chip type light emitting diode (green LED) that emits green light, and a chip type light emitting diode (red LED) that emits red light.

A type of the white LED is not particularly limited, and a known white LED can be used. Specifically, the white LEDs of the following three types of light-emitting methods can be mentioned.
(1) A method for obtaining white light by exciting a yellow light-emitting phosphor using the blue LED (first method)
(2) A method for creating white light by mixing light radiated from the three primary colors of the blue LED, the green LED, and the red LED (second method)
(3) A method for exciting the red, green, and blue-emitting phosphors by using the LED light source (a near-ultraviolet LED or a violet-emitting LED) having a shorter wavelength than blue (third method)

From the viewpoint of being driven at low cost and having excellent luminous efficiency, the white LED of the first method is preferable.
In addition, from the viewpoint that a display color can be randomly changed with high luminance, the white LED of the second method is preferable.

When viewed by the viewer and the LED light source becomes transparent to be visually recognized (seen through) in a dot shape, the light-diffusing member, such as the known light-diffusing sheet or the known light-diffusing film, is disposed between the colored light-transmitting base material and the LED light source, the emission light of the LED light source is diffused such that the colored light-transmitting base material is uniformly irradiated. Therefore, it is possible to prevent the LED light source from becoming transparent to be visually recognized (seen through) in the dot shape.

As the light source unit, it is further preferable to use a light emitting element in which the LED light source is formed on a black circuit board. Specifically, as shown in Fig. 2 or 3, an LED substrate 42, which is mounted on the black circuit board 41 such that the light source unit (LED light source) 40 (hereinafter, referred to as an "LED light source 40") faces the colored light-transmitting base material 10, may be mentioned.

The black circuit board 41 includes, for example, a wiring substrate in which a wiring pattern is formed on a glass epoxy base material, and, for example, the LED light source 40 and circuit components, such as resistors and capacitors, are electrically connected to the wiring pattern.

When the light source is turned off, it is difficult for the viewer to visually recognize the black circuit board 41. Therefore, the black light-blocking base material 20 can have more excellent designability of the vehicle interior and exterior members and the like in combination with an effect of lowering the presence of the display apparatus viewed by the viewer.

With regard to the number of LED light sources 40, a necessary number of LED light sources 40 corresponding to the shape (area) of the colored light-transmitting base material 10, the shape (area) of the black light-transmitting member 56, and the shape (area) of the light-blocking base material 20 may be provided.

### <Combination of Colored Light-Transmitting Base Material with LED Light Source>

The display apparatus of the present invention can exhibit the desired chromatic color tone when the light source is turned on, by combining the light transmittance of the colored light-transmitting base material with the emission light wavelength of the LED light source.

As a combination of the colored light-transmitting base material and the LED light source, for example, methods disclosed in PCT International Publication No. 2016/098746, PCT International Publication No. 2019/225636, and PCT International Publication No. 2012/111718 may be mentioned. Specifically, when it is desired to visually recognize the display apparatus in any of red, blue, and green color tones, a light emitting element equipped with an LED light source or a planar light source provided with an LED light source can be used for the light source unit. As the LED light source, a white light emitting diode (white LED), a red light emitting diode (red LED), a blue light emitting diode (blue LED), and a green light emitting diode (green LED) can be used. As the colored light-transmitting base material, as disclosed in International Publication No. 2016/098746, International Publication No. 2019/225636, or International Publication No. 2012/111718, materials that use a known organic dye alone or in combination of two or more known organic dyes can be used for a known transparent resin.

### [Vehicle Interior and Exterior Member]

The vehicle interior and exterior member of the present invention includes the above-described display apparatus of the present invention, thereby having excellent designability and visibility. Specifically, when the light source unit is turned on or turned off, the appearance (look) of the vehicle interior and exterior member becomes peculiarly unique (interesting) when the vehicle interior and exterior member is viewed straight from the viewer side. As a result, the vehicle interior and exterior member of the present invention can realize a new look.

A specific example of the vehicle interior and exterior member includes a vehicle light cover, a scuff plate, a door trim, a meter panel, an audio car navigation system display panel, and a pillar, and any one selected from a group consisting of them is preferable.

### [Illumination Light Lamp]

The illumination light lamp of the present invention refers to a light-emitting device or an illumination light tool used for a light-emitting unit of an illumination light.

The illumination light lamp of the present invention includes the above-described display apparatus of the present invention, and thus designability and visibility are excellent. Specifically, when the light source unit is turned on or turned off, the appearance (look) of the illumination light lamp becomes peculiarly unique (interesting) when the illumination light lamp is viewed straight from the viewer side. As a result, the illumination light lamp of the present invention can realize a new look.

As a specific example of the illumination light lamp of the present invention, an indoor illumination light tool, a road illumination light tool, a guidance display light, and an alarm display light may be mentioned.

### [Display Signboard]

The display signboard of the present invention includes the above-described display apparatus of the present invention, and thus designability and visibility are excellent. Specifically, when the light source unit is turned on or turned off, the appearance (look) of the display signboard becomes peculiarly unique (interesting) when an illumination signboard is viewed straight from the viewer side. As a result, the display signboard of the present invention can realize a new look.

As a specific example of the display signboard of the present invention, an internally illuminated store signboard, a wall-surface signboard, and an illumination stand may be mentioned.

### [Vehicle]

Since the vehicle of the present invention includes the above-described vehicle interior and exterior member of the present invention or the above-described illumination light lamp of the present invention, visibility is excellent.

When the light source unit is turned on or turned off, the appearance (look) becomes peculiarly unique (interesting) when viewed straight from the viewer side and a new look may be realized, and thus designability is excellent.

### [Examples]

Hereinafter, although the present invention will be described in detail with reference to examples, the present invention is not limited thereto.

### [Measurement Method]

Measurement methods of examples and comparative examples will be described below.

### <Measurement of Color of Transmitted Light>

For the display apparatus, the color of the transmitted light was measured by the following method.

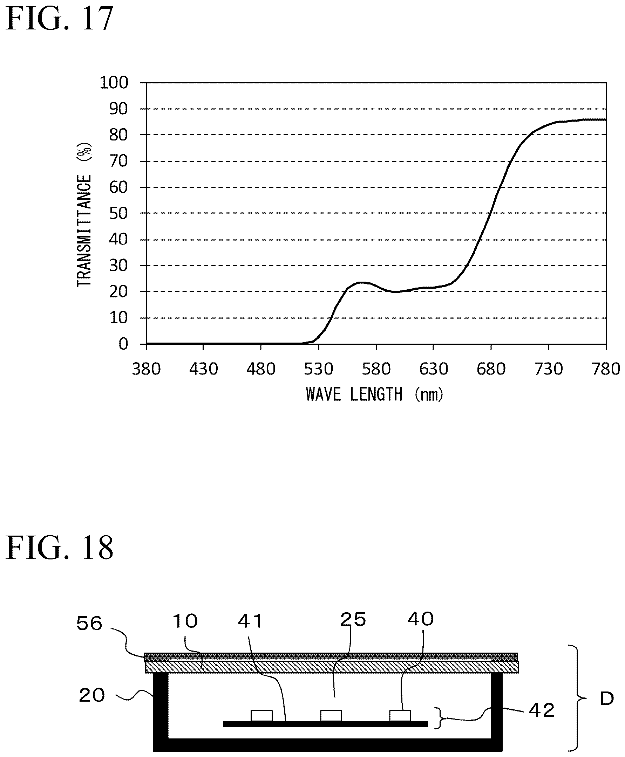

Fig. 18 is a schematic view for explaining a method for measuring the color of the transmitted light of the display apparatus. The display apparatus is created which has the colored light-transmitting base material 10, the black light-transmitting member 56 containing a black colorant, the light-blocking base material 20, and the light source unit (LED light source) 40 located between the colored light-transmitting base material 10 and the light-blocking base material 20. One of the surfaces of the colored light-transmitting base material 10 is used as a light incident end surface, and one of the surfaces of the black light-transmitting member 56 is used as a light emitting surface.

The light from the light source unit is incident on the back surface of the colored light-transmitting base material, and the color of the light transmitted from the surface of the black light-transmitting member is visually confirmed.

### <Measurement of Total Light Transmittance (T, T_{α}, T_{β})>

Based on ISO 13468-1: 1996, using a transmittance meter (model name "HM-100", manufactured by Murakami Color Technology Research Institute), the total light transmittance (T_{α}) of the colored light-transmitting base material, the total light transmittance (T_{β}) of the black light-transmitting member, and the total light transmittance (T) of the laminate, in which the colored light-transmitting base material and the black light-transmitting member are bonded, are measured.

### <Method for Measuring Light Transmittance>

The light transmittance of light having a wavelength of 380 nm or more and 780 nm or less in the colored light-transmitting base material is measured by transmitting light having the wavelength of 380 nm or more and 780 nm or less from a back surface of a test piece obtained through the above-described method and using a spectrophotometer (model name "U4100", manufactured by Hitachi High-Technologies Corporation) for the light transmitted from the surface of the test piece.

### <Measurement of L^{∗} Value>

The L^{∗} value (L^{∗}₁) of the reflection light of the black light-transmitting member, and the L^{∗} value (L^{∗}₂) of the layer including the layer of the colored light-transmitting base material and the layer of the black light-transmitting member is calculated from the tristimulation values X, Y, and Z measured by the reflection measurement under the condition of a C light source and a viewing angle of 2° using a spectrophotometer (model name "U4100", manufactured by Hitachi High-Technologies Co., Ltd.) in accordance with ISO 11664-4. In the reflection measurement, specular reflection components and diffuse reflection components are integrated and received using the integrating sphere.

### [Abbreviation of Compounds]

Abbreviations of compounds used in examples and comparative examples are as follows.
Methacrylic resin (1): a methyl methacrylate (MMA)-methyl acrylate (MA) copolymer (trade name: Acrypet (registered trademark) VH, manufactured by Mitsubishi Chemical Corporation)
Dye (1): a dye having a color index of Solvent Red 135, and the wavelength indicating the maximum value of the absorbance is 495 nm.
Dye (2): a dye having a color index of Solvent Violet 13 and the wavelength indicating the maximum value of the absorbance is 580 nm.
Dye (3): a dye having a color index of Solvent Red 179, and the wavelength indicating the maximum value of the absorbance is 475 nm.
Dye (4): a dye having a color index of Solvent Green 3, and the wavelength indicating the maximum value of the absorbance is 635 nm.
Dye (5): a dye having a color index of Solvent Orange 60, and the wavelength indicating the maximum value of the absorbance is 450 nm.
Pigment (1): Carbon black (trade name: Mitsubishi Carbon Black # 45, manufactured by Mitsubishi Chemical Corporation)

### [Production Example 1]

### (Preparation of Colored Light-Transmitting Base Material (1))

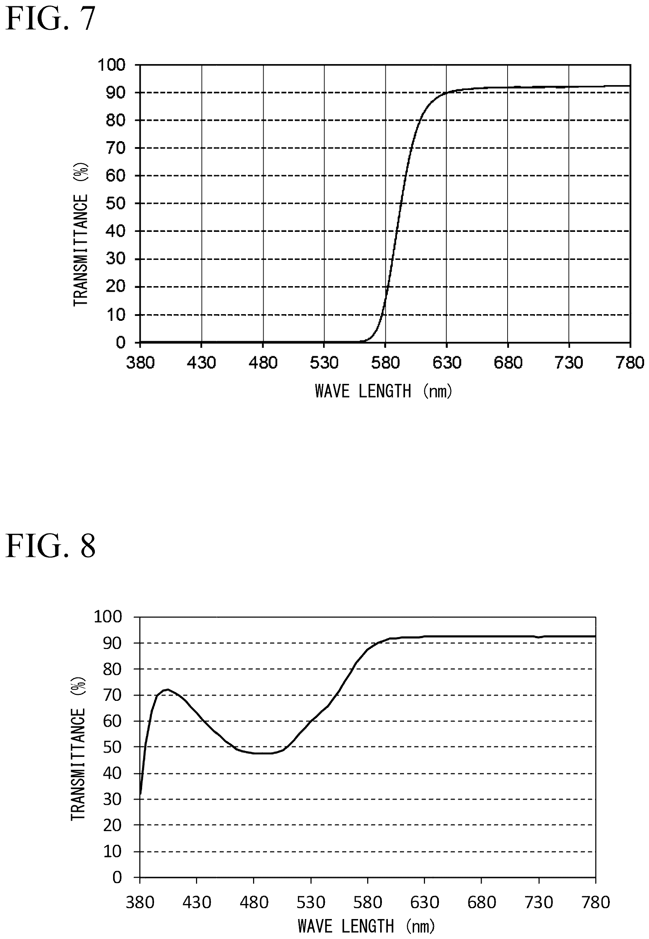

With respect to the methacrylic resin (1) as the transparent resin, the dye (1) is added as the dye so as to show the light transmittance shown in Fig. 7, supplied to a twin-screw extruder (model name "PCM45", manufactured by Ikegai Co., Ltd.), and kneaded at 250°C, thereby obtaining a pellet type colored resin composition.

The pellets of the obtained colored resin composition are supplied to an injection molding machine (model name "SE75D" manufactured by Sumitomo Heavy Industries, Ltd.), and the molding temperature is set to 250°C, thereby obtaining the colored light-transmitting base material (1) (flat plate having a thickness of 2 mm × a width of 100 mm × a length of 100 mm) which has the light transmittance shown in Fig. 7.

### [Production Example 2]

### (Preparation of Colored Light-Transmitting Base Material (2))

The colored light-transmitting base material (2) (flat plate having a thickness of 2 mm × a width of 100 mm × a length of 100 mm), which has the light transmittance shown in Fig. 8, is obtained under the same conditions as in the first production example except that the dye (1) is added as the dye so as to show the light transmittance shown in Fig. 8.

### [Production Example 3]

### (Preparation of Colored Light-Transmitting Base Material (3))

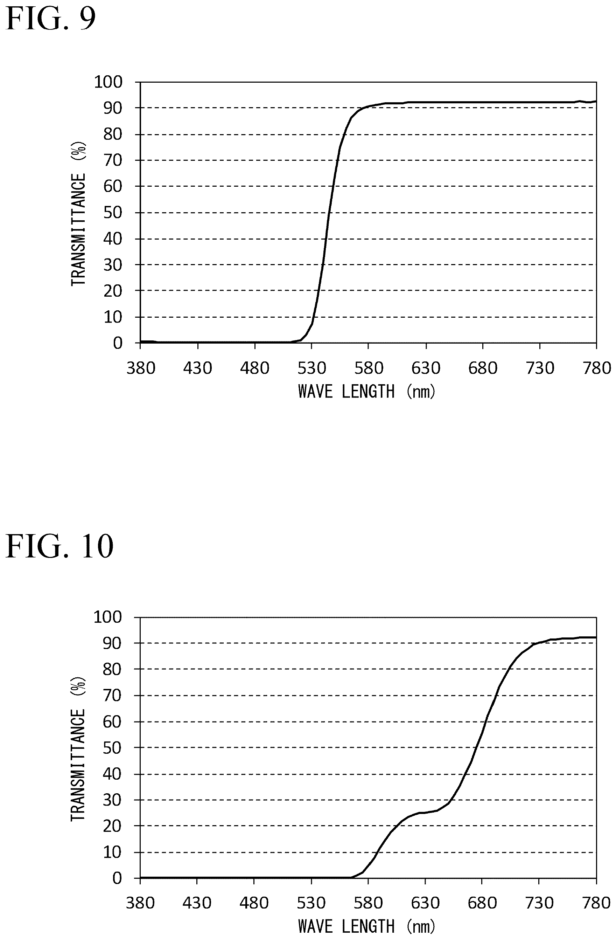

The colored light-transmitting base material (3) (flat plate having a thickness of 2 mm × a width of 100 mm × a length of 100 mm), which has the light transmittance shown in Fig. 9, is obtained under the same conditions as in Production Example 1 except that the dye (5) is added as the dye so as to show the light transmittance shown in Fig. 9.

### [Production Example 4]

### (Preparation of Colored Light-Transmitting Base Material (4))

The colored light-transmitting base material (4) (flat plate having a thickness of 2 mm × a width of 100 mm × a length of 100 mm), which has the light transmittance shown in Fig. 10, is obtained under the same conditions as in Production Example 1 except that the dye (1), the dye (2), the dye (3), and the dye (4) are added as the dye so as to show the light transmittance shown in Fig. 10.

### [Production Example 5]

### (Preparation of Colored light-transmitting base material (5))

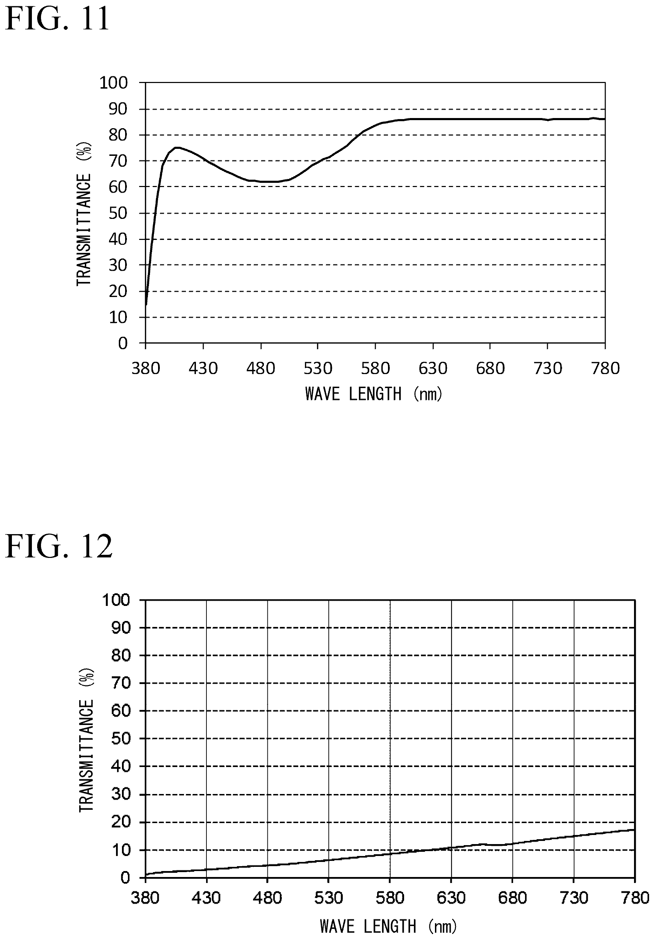

The colored light-transmitting base material (5) (flat plate having a thickness of 2 mm × a width of 100 mm × a length of 100 mm), which has the light transmittance shown in Fig. 11, is obtained under the same conditions as in Production Example 1 except that the dye (1) is added as the dye so as to show the light transmittance shown in Fig.11.

### [Production Example 6]

### (Creation of Black Light-Transmitting Member (6))

With respect to 100 parts by mass of the methacrylic resin (1) as the transparent resin, the pigment (1) is added as the pigment so as to be the light transmittance shown in Fig. 12, supplied to the twin-screw extruder (model name "PCM45", manufactured by Ikegai Co., Ltd.), and kneaded at 250°C, thereby obtaining a pellet type colored resin composition.

The pellets of the obtained colored resin composition are supplied to the injection molding machine (model name "SE75D" manufactured by Sumitomo Heavy Industries, Ltd.), and the molding temperature is set to 250°C, thereby obtaining the black light-transmitting member (6) (flat plate having a thickness of 2 mm × a width of 100 mm × a length of 100 mm) which has the light transmittance shown in Fig. 12.

### [Production Example 7]

### (Creation of Black Light-Transmitting Member (7))

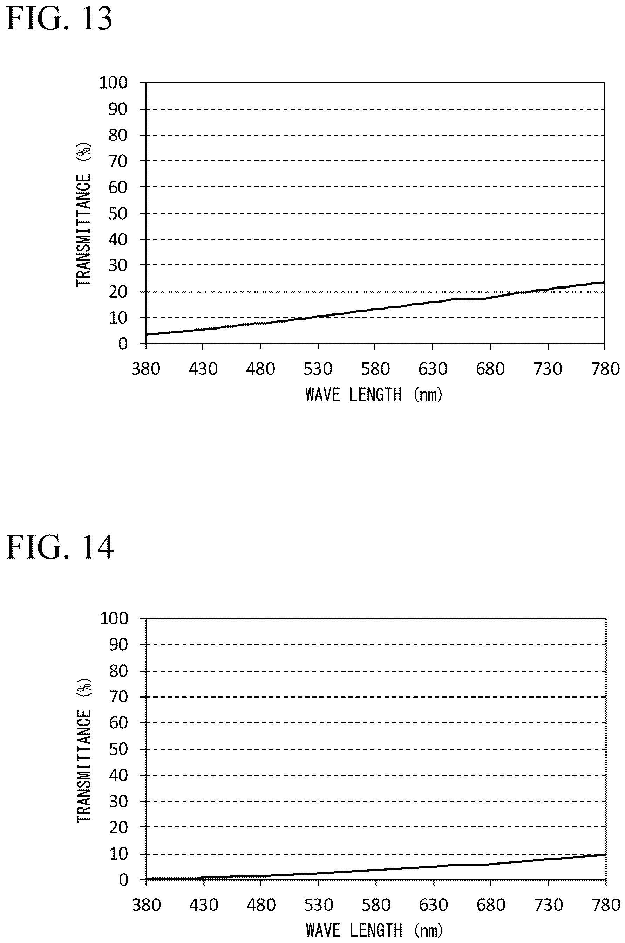

The black light-transmitting member (7) (flat plate having a thickness of 2 mm × a width of 100 mm × a length of 100 mm), which has the light transmittance shown in Fig. 13, is obtained under the same conditions as in Production Example 6 except that the pigment (1) is added as the pigment so as to show the light transmittance shown in Fig.13.

### [Production Example 8]

### (Creation of Black Light-Transmitting Member (8))

The black light-transmitting member (8) (flat plate having a thickness of 2 mm × a width of 100 mm × a length of 100 mm), which has the light transmittance shown in Fig. 14, is obtained under the same conditions as in Production Example 6 except that the pigment (1) is added as the pigment so as to show the light transmittance shown in Fig.14.

### [Production Example 9]

### (Creation of Black Light-Transmitting Member (9))

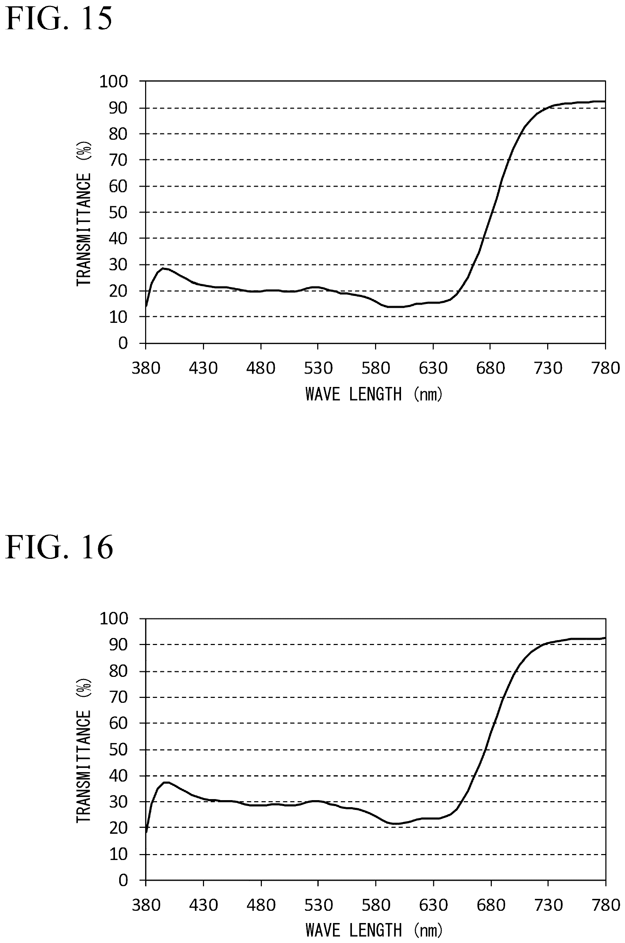

The black light-transmitting member (9) (flat plate having a thickness of 2 mm × a width of 100 mm × a length of 100 mm), which has the light transmittance shown in Fig. 15, is obtained under the same conditions as in Production Example 6 except that the dye (2), the dye (3), and the dye (4) are added as the dye so as to be the light transmittance shown in Fig.15.

### [Production Example 10]

### (Creation of Black Light-Transmitting Member (10))

The black light-transmitting member (10) (flat plate having a thickness of 2 mm × a width of 100 mm × a length of 100 mm), which has the light transmittance shown in Fig. 16, is obtained under the same conditions as in Production Example 6 except that the dye (2), the dye (3), and the dye (4) are added as the dye so as to be the light transmittance shown in Fig.16.

### [Production Example 11]

### (Creation of Black Light-Transmitting Member (11))

The black light-transmitting member (11) (flat plate having a thickness of 2 mm × a width of 100 mm × a length of 100 mm), which has the light transmittance shown in Fig. 17, is obtained under the same conditions as in Production Example 6 except that the dye (2), the dye (3), the dye (4), and the dye (5) are added as the dye so as to be the light transmittance shown in Fig.17.

### [Example 1]

### (Creation of Display Apparatus)

As the light-blocking base material, a box-shaped molded product is used which has an opening and is obtained by injection-molding an acrylonitrile butadiene styrene resin (ABS resin) that is mixed with a predetermined amount of carbon black and that has a light-blocking property.

Further, as the light source unit, an LED substrate in which three white LEDs (5 mm surface mount type, output: 112000 cd/m²) are arranged on a black substrate at intervals of 20 mm is used.

The display apparatus having the configuration shown in Fig. 1 is obtained using the colored light-transmitting base material (1), the black light-transmitting member (6), the light-blocking base material, and the light source unit. Table 1 shows the evaluation results of the obtained display apparatus.

### [Comparative Example 1]

The display apparatus is obtained under the same conditions as in the first example except that the disposition of the colored light-transmitting base material (1) and the black light-transmitting member (6) is reversed, that is, the emission light of the light source is transmitted through the black light-transmitting member and the colored light-transmitting base material in this order. Table 1 shows the evaluation results of the obtained display apparatus.

### [Examples 2 to 4 and Comparative Examples 2 to 4]

A display apparatus was obtained under the same conditions as in the first example except that the combination of the colored light-transmitting base material and the black light-transmitting member was changed as shown in Table 1. Table 1 shows the evaluation results of the obtained display apparatus.

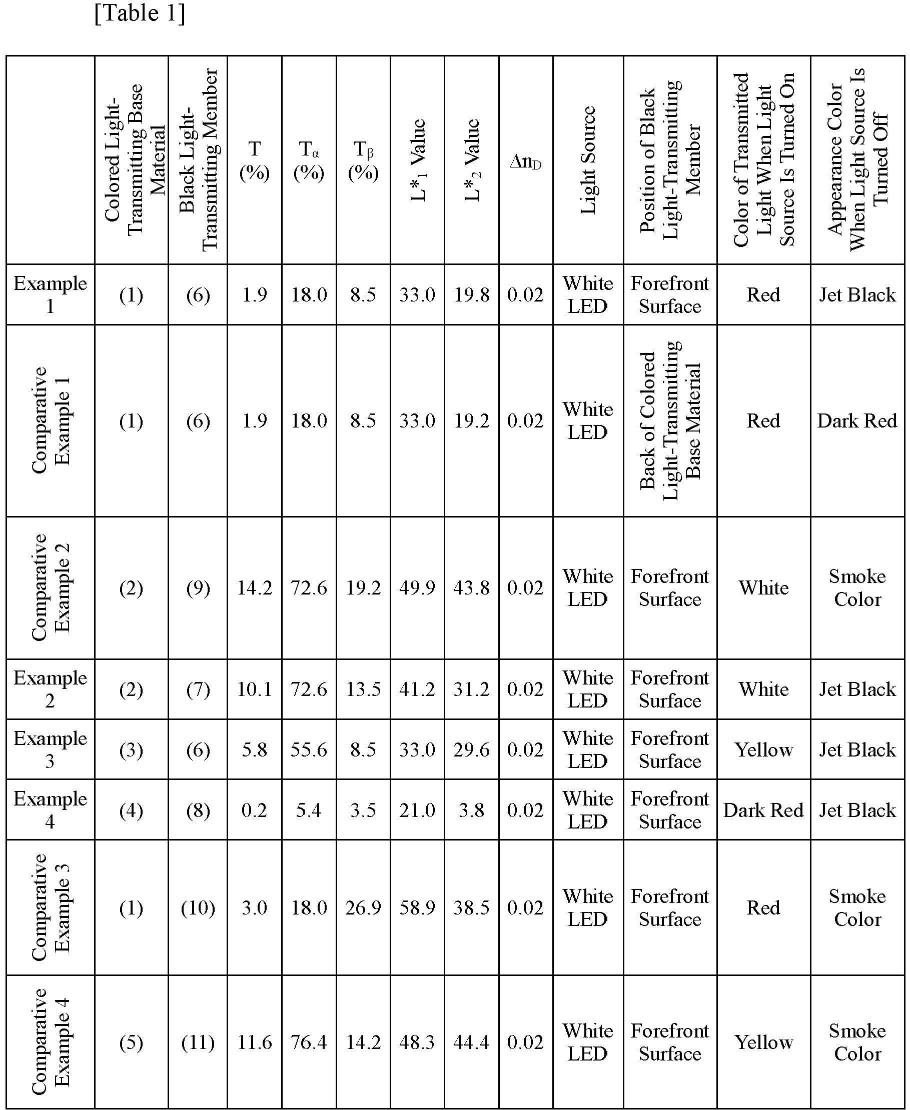

The display device of the present invention obtained in the first to fourth examples exhibits a predetermined color tone (red color) when the light source is turned on, and exhibits the black color tone (jet black) when the light source is turned off.

The display apparatus obtained in the first comparative example is disposed such that the emission light of the light source is transmitted through the black light-transmitting member and the colored light-transmitting base material in this order. Therefore, the black color tone (jet black) is sufficient when the light source is turned off.

The display apparatus obtained in the second comparative example has a large total light transmittance (T) and a large L^{∗} value (L^{∗}₁) of the black light-transmitting member. Therefore, the black color tone (jet black) is insufficient when the light source is turned off.

The display apparatus obtained in the third and fourth comparative examples has the large L^{∗} value (L^{∗}₁) of the black light-transmitting member. Therefore, the black color tone (jet black) is insufficient when the light source is turned off.

### [Industrial Applicability]

The display apparatus of the present invention has excellent designability and high luminance, and thus can be suitably used for the vehicle interior and exterior member, the illumination light lamp, and the display signboard.

In particular, for use as the vehicle interior and exterior member, the display apparatus can be suitably used for the vehicle light cover, the scuff plate, the door trim, the meter panel, the audio system display panel, the car navigation system display panel, the pillar, and the like.

Further, in the vehicle including the vehicle interior and exterior member of the present invention or the illumination light lamp of the present invention as the vehicle interior and exterior member, when the light source unit is turned on and turned off, an appearance (look) when viewed straight from the viewer side becomes peculiarly unique (interesting), and thus a new look may be realized and designability is excellent.

### [Reference Signs List]

D: Display apparatus
10: Colored light-transmitting base material
20: Light-blocking base material
25: Space
29: Light-guiding body
30: Light source unit (planar light source)
35: LED light source
40: Light source unit (LED light source)
41: Black circuit board
42: LED substrate
50: Light-blocking member (cutting sheet)
52: Light-blocking member
51: Light-transmitting unit
56: Black light-transmitting member
60: Display unit
70: Light-emitting mechanism

## Claims

1. A display apparatus comprising:
a colored light-transmitting base material;
a black light-transmitting member containing a black colorant; and
a light source unit, wherein
the light source unit is disposed such that emission light of a light source is transmitted through the colored light-transmitting base material and the black light-transmitting member in this order,
a total light transmittance (T) of a layer obtained by combining a layer of the colored light-transmitting base material and a layer of the black light-transmitting member is 13% or less, and
the black light-transmitting member has an L^{∗} value of 45 or less.

2. The display apparatus according to Claim 1, wherein a total light transmittance (T_{α}) of the colored light-transmitting base material is 5.0% or more.

3. The display apparatus according to Claim 1 or 2, wherein the colored light-transmitting base material has a transmission band for transmitting light in a predetermined wavelength range.

4. A display apparatus comprising:
a colored light-transmitting base material;
a light-blocking base material;
a black light-transmitting member containing a black colorant; and
a light source unit, at least a part of which is located between the colored light-transmitting base material and the light-blocking base material, wherein
the light source unit is disposed to be located at a position facing the black light-transmitting member while interposing the colored light-transmitting base material therebetween such that emission light of a light source is transmitted through the colored light-transmitting base material and the black light-transmitting member in this order,
the colored light-transmitting base material has a transmission band for transmitting light in a predetermined wavelength range, and a total light transmittance (T_{α}) of the colored light-transmitting base material is 5.0% or more, and
the black light-transmitting member has an L^{∗} value of 45 or less.

5. The display apparatus according to Claim 4, wherein a total light transmittance (T) of a layer obtained by combining a layer of the colored light-transmitting base material and a layer of the black light-transmitting member is 13% or less.

6. The display apparatus according to any one of Claims 1 to 5, wherein a total light transmittance (T) of the layer obtained by combining the layer of the colored light-transmitting base material and the layer of the black light-transmitting member is 0.4% or more.

7. The display apparatus according to any one of Claims 1 to 6, wherein a total light transmittance (T) of the layer obtained by combining the layer of the colored light-transmitting base material and the layer of the black light-transmitting member is 4.0% or more.

8. The display apparatus according to any one of Claims 1 to 7, wherein the layer including the layer of the colored light-transmitting base material and the layer of the black light-transmitting member has an L^{∗} value of 34 or less.

9. The display apparatus according to any one of Claims 1 to 8, wherein the black light-transmitting member has a total light transmittance (T_{β}) of 15% or less.

10. The display apparatus according to any one of Claims 1 to 9, wherein the colored light-transmitting base material has a total light transmittance (T_{α}) of 80% or less.

11. The display apparatus according to any one of Claims 1 to 10, wherein the black light-transmitting member is laminated on an entirety or a part of a surface of the colored light-transmitting base material.

12. The display apparatus according to any one of Claims 1 to 11, wherein the black light-transmitting member is laminated on an entirety or a part of a surface of the colored light-transmitting base material such that a bonding interface is substantially planar.

13. The display apparatus according to any one of Claims 1 to 12, wherein a difference (Δn_{D}) in a refractive index between the colored light-transmitting base material and the black light-transmitting member is 0.03 or less.

14. The display apparatus according to any one of Claims 1 to 13, wherein at least one of the colored light-transmitting base material and the black light-transmitting member has light diffusivity.

15. The display apparatus according to any one of Claims 1 to 14, wherein the colored light-transmitting base material includes a transparent resin and at least one type of colorant selected from the group consisting of a dye and a pigment.

16. The display apparatus according to any one of Claims 1 to 15, wherein the black light-transmitting member includes a transparent resin and at least one type of colorant selected from the group consisting of a dye and a pigment.

17. The display apparatus according to Claim 15 or 16, wherein the transparent resin is at least one selected from a methacrylic resin, a polycarbonate resin, and a polystyrene resin.

18. The display apparatus according to any one of Claims 1 to 17, wherein the light source is a white LED.

19. A vehicle interior and exterior member comprising:
the display apparatus according to any one of Claims 1 to 18.

20. An illumination light lamp comprising:
the display apparatus according to any one of Claims 1 to 18.

21. A display signboard comprising:
the display apparatus according to any one of Claims 1 to 18.

22. A vehicle comprising:
the vehicle interior and exterior member according to Claim 19 or the illumination light lamp according to Claim 20.
